# EUROPEAN PATENT APPLICATION

(11) **EP 4 068 655 A2**
(43) Date of publication of application: **05.10.2022**
(21) Application number: 22163467.8
(22) Date of filing: 22.03.2022
(51) Int. Cl.: H04B 10/25, H04B 10/572

(54) **SINGLE-FIBER BIDIRECTIONAL OPTICAL MODULE, COMMUNICATION APPARATUS, OPTICAL COMMUNICATION SYSTEM, AND COMMUNICATION METHOD**

(30) Priority: 29.03.2021 CN 202110333424
(71) Applicant: Huawei Technologies Co., Ltd., Longgang District Shenzhen, Guangdong 518129 (CN)
(72) Inventor: GUO, Ying, Shenzhen, 518129 (CN); LIU, Dada, Shenzhen, 518129 (CN)
(74) Representative: Maiwald Patent- und Rechtsanwaltsgesellschaft mbH

(57) **Abstract**

This application discloses a single-fiber bidirectional optical module. The single-fiber bidirectional optical module includes an optical fiber port, a tunable light source, a tunable filter, a receiver, and a controller. The tunable light source is configured to transmit a first optical signal to the tunable filter. The tunable filter is configured to: transmit an optical signal of a target wavelength in the first optical signal from the tunable light source to the optical fiber port, and transmit an optical signal of a wavelength other than the target wavelength in a second optical signal from the optical fiber port to the receiver. The receiver is configured to receive the optical signal transmitted by the tunable filter. The controller is configured to: adjust a wavelength of the first optical signal transmitted by the tunable light source, and adjust the target wavelength of the tunable filter.

## Description

### TECHNICAL FIELD

This application relates to the field of optical communication, and in particular, to a single-fiber bidirectional optical module, a communication apparatus, an optical communication system, and a communication method.

### BACKGROUND

A single-fiber bidirectional (bidirectional, BIDI) optical module is a module that implements bidirectional transmission of optical signals through one optical fiber.

Each single-fiber bidirectional optical module includes a laser configured to transmit an optical signal, a receiver configured to receive an optical signal, and a filter. The filter is configured to transmit an optical signal from the laser to an optical fiber port of the single-fiber bidirectional optical module, and transmit an optical signal from the optical fiber port to the receiver. Conventional single-fiber bidirectional optical modules are used in pairs. It is assumed that a pair of single-fiber bidirectional optical modules includes a first single-fiber bidirectional optical module and a second single-fiber bidirectional optical module. A wavelength of an optical signal transmitted by a laser of the first single-fiber bidirectional optical module matches a wavelength of an optical signal received by a receiver of the second single-fiber bidirectional optical module, and a wavelength of an optical signal received by a receiver of the first single-fiber bidirectional optical module matches a wavelength of an optical signal transmitted by a laser of the second single-fiber bidirectional optical module.

However, when the single-fiber bidirectional optical module is deployed and maintained in an optical communication system, to implement a transceiver function of the single-fiber bidirectional optical module, a wavelength of an optical signal of the single-fiber bidirectional optical module needs to be preplanned, and wavelengths of optical signals of a pair of single-fiber bidirectional optical modules need to be manually configured, to ensure wavelength matching of the pair of single-fiber bidirectional optical modules. Consequently, deployment and maintenance of the single-fiber bidirectional optical module are complex, and this affects deployment and maintenance efficiency.

### SUMMARY

Embodiments of this application provide a single-fiber bidirectional optical module, a communication apparatus, an optical communication system, and a communication method. Technical solutions are as follows.

According to a first aspect, a single-fiber bidirectional optical module is provided. The single-fiber bidirectional optical module includes: an optical fiber port for connecting to an optical fiber, a tunable light source, a tunable filter, a receiver, and a controller. The tunable light source is configured to transmit a first optical signal to the tunable filter. The tunable filter is configured to: transmit an optical signal of a target wavelength in the first optical signal from the tunable light source to the optical fiber port, and transmit an optical signal of a wavelength other than the target wavelength in a second optical signal from the optical fiber port to the receiver. The receiver is configured to receive the optical signal transmitted by the tunable filter. The controller is configured to: adjust a wavelength of the first optical signal transmitted by the tunable light source, and adjust the target wavelength of the tunable filter, so that an adjusted target wavelength includes an adjusted wavelength of the first optical signal and does not include a wavelength of the second optical signal.

In this embodiment of this application, the single-fiber bidirectional optical module can adjust the wavelength of the first optical signal transmitted by the tunable light source, and adjust the target wavelength of the tunable filter, so that the adjusted target wavelength includes the adjusted wavelength of the first optical signal and does not include the wavelength of the second optical signal. In this way, the tunable filter can transmit the first optical signal from the tunable light source to the optical fiber port, and transmit the second optical signal from the optical fiber port to the receiver, thereby ensuring a transceiver function of the single-fiber bidirectional optical module. When the single-fiber bidirectional optical module is deployed and maintained in an optical communication system, because the single-fiber bidirectional optical module can ensure its transceiver function, a wavelength of an optical signal of the single-fiber bidirectional optical module does not need to be preplanned and be manually configured. This effectively simplifies deployment and maintenance of the single-fiber bidirectional optical module, and improves deployment and maintenance efficiency.

In this embodiment of this application, a process of adjusting the wavelength of the first optical signal transmitted by the tunable light source and adjusting the target wavelength of the tunable filter is referred to as a wavelength adjustment procedure. The controller may perform one or more wavelength adjustment procedures, to achieve an objective that the adjusted target wavelength matches the wavelength of the first optical signal and does not match the wavelength of the second optical signal.

The wavelength adjustment procedure may have a plurality of trigger mechanisms. In this embodiment of this application, the following three trigger mechanisms are used as examples for description.

In a first trigger mechanism, a trigger condition is that the controller receives a wavelength adjustment instruction. To be specific, the controller is configured to: after receiving the wavelength adjustment instruction, adjust the wavelength of the first optical signal transmitted by the tunable light source, and adjust the target wavelength of the tunable filter.

In a second trigger mechanism, the trigger condition is that the controller determines that the target wavelength does not include the wavelength of the first optical signal. To be specific, after determining that the target wavelength does not include the wavelength of the first optical signal, the controller adjusts the wavelength of the first optical signal transmitted by the tunable light source, and adjusts the target wavelength of the tunable filter.

In a third trigger mechanism, the trigger condition is that the controller determines that the target wavelength includes the wavelength of the second optical signal. To be specific, the controller is configured to: after determining that the target wavelength includes the wavelength of the second optical signal, adjust the wavelength of the first optical signal transmitted by the tunable light source, and adjust the target wavelength of the tunable filter.

In the third trigger mechanism, the controller may detect, in a plurality of manners, whether the target wavelength includes the wavelength of the second optical signal. For example, the controller may determine, by detecting whether both the optical fiber port and the receiver have optical signal input, whether the target wavelength includes the wavelength of the second optical signal. The single-fiber bidirectional optical module further includes an optical detector. It is assumed that the target wavelength includes the wavelength of the first optical signal before the wavelength of the first optical signal transmitted by the tunable light source is adjusted and the target wavelength of the tunable filter is adjusted, therefore, the optical detector is configured to detect the second optical signal from the optical fiber port. The controller is configured to: when the optical detector detects the optical signal and the receiver detects no optical signal, determine that the target wavelength includes the wavelength of the second optical signal. Whether the target wavelength includes the wavelength of the second optical signal is detected by using the optical detector and the receiver, to quickly identify whether the target wavelength matches the wavelength of the second optical signal.

Optionally, the single-fiber bidirectional optical module further includes an optical splitter located between the tunable filter and the optical fiber port. The optical splitter is configured to: transmit one part of the second optical signal from the optical fiber port to the tunable filter, and transmit the other part to the optical detector. The optical detector is configured to detect the optical signal transmitted by the optical splitter. The optical splitter is set, so that the one part of the second optical signal transmitted on a main path is output to the optical detector from a tributary path, to reduce impact on the second optical signal transmitted on the main path.

The optical splitter may be a coupler, a divider, a demultiplexer, or another optical splitting structure. Costs of manufacturing the demultiplexer are low, and costs can be effectively reduced by deploying the demultiplexer in the single-fiber bidirectional optical module.

In an actual implementation, the controller is configured to: perform at least two wavelength adjustment procedures until the adjusted target wavelength includes the adjusted wavelength of the first optical signal and does not include the wavelength of the second optical signal. The wavelength adjustment procedure includes: adjusting the wavelength of the first optical signal transmitted by the tunable light source, and adjusting the target wavelength of the tunable filter, where every two adjacent wavelength adjustment procedures are performed at an interval of target duration. In an optional manner, the target duration is preset duration. The target duration may be preset fixed duration, or may be preset variable duration. For example, the variable duration is duration that changes according to a specific rule. For example, the target duration is duration that increases by an equal proportion or an equal difference. In another optional manner, the target duration is random duration. In the foregoing two optional implementations, execution moments of wavelength adjustment procedures of two single-fiber bidirectional optical modules are staggered, so that the wavelength adjustment procedures of the two single-fiber bidirectional optical modules are not executed synchronously. In this way, a quantity of times of performing the wavelength adjustment procedures of the two single-fiber bidirectional optical modules is reduced.

In this embodiment of this application, the tunable light source may support two wavelengths, and correspondingly, the tunable filter supports two groups of target wavelengths. In this way, on a premise that the single-fiber bidirectional optical module can execute the wavelength adjustment procedure, a probability of successfully performing highly-efficient wavelength negotiation is effectively improved.

The tunable filter may be a comb filter. When the tunable filter is the comb filter, two groups of target wavelengths supported by the comb filter are complementary (also referred to as opposite).

According to a second aspect, a communication apparatus is provided, including the single-fiber bidirectional optical module according to the first aspect; an electrical signal generation module, where the electrical signal generation module is connected to a tunable light source, and the electrical signal generation module is configured to input an electrical signal to the tunable light source; and an electrical signal processing module, where the electrical signal processing module is connected to a receiver, the receiver is further configured to output an electrical signal to the electrical signal processing module based on a received optical signal, and the electrical signal processing module is configured to process the received electrical signal.

According to a third aspect, an optical communication system is provided. The optical communication system includes two single-fiber bidirectional optical modules connected through an optical fiber, and the two single-fiber bidirectional optical modules include the single-fiber bidirectional optical module according to the first aspect.

According to a fourth aspect, an optical communication system is provided. The optical communication system includes an optical fiber, and two communication apparatuses connected through the optical fiber, where the two communication apparatuses both include the communication apparatus according to the second aspect.

According to a fifth aspect, an optical communication method is provided, where the method is applied to a single-fiber bidirectional optical module. The method includes: transmitting, by using a tunable light source, a first optical signal to a tunable filter; transmitting, by using the tunable filter, an optical signal of a target wavelength in the first optical signal from the tunable light source to an optical fiber port of the single-fiber bidirectional optical module, and transmitting an optical signal of a wavelength other than the target wavelength in a second optical signal from the optical fiber port to a receiver; receiving, by using the receiver, the optical signal transmitted by the tunable filter; and adjusting a wavelength of the first optical signal transmitted by the tunable light source, and adjusting the target wavelength of the tunable filter, so that an adjusted target wavelength includes an adjusted wavelength of the first optical signal and does not include a wavelength of the second optical signal.

A process of adjusting a wavelength of the first optical signal transmitted by the tunable light source, and adjusting the target wavelength of the tunable filter includes: after receiving a wavelength adjustment instruction or after determining that the target wavelength includes the wavelength of the second optical signal, adjusting the wavelength of the first optical signal transmitted by the tunable light source, and adjusting the target wavelength of the tunable filter.

It is assumed that before the wavelength of the first optical signal transmitted by the tunable light source is adjusted, and the target wavelength of the tunable filter is adjusted, the target wavelength includes the wavelength of the first optical signal. Therefore, the method further includes: detecting, by using an optical detector, the second optical signal from the optical fiber port; and when the optical detector detects the second optical signal from the optical fiber port and the receiver detects no optical signal, determining that the target wavelength includes the wavelength of the second optical signal.

Optionally, the detecting, by using an optical detector, the second optical signal from the optical fiber port includes: transmitting, by using an optical splitter, one part of the second optical signal from the optical fiber port to the tunable filter, and transmitting the other part to the optical detector; and detecting, by the optical detector, the optical signal transmitted by the optical splitter.

In an optional example, a process of adjusting a wavelength of the first optical signal transmitted by the tunable light source, and adjusting the target wavelength of the tunable filter, so that an adjusted target wavelength includes an adjusted wavelength of the first optical signal and does not include a wavelength of the second optical signal includes: performing at least two wavelength adjustment procedures until the adjusted target wavelength includes the adjusted wavelength of the first optical signal and does not include the wavelength of the second optical signal. The wavelength adjustment procedure includes: adjusting the wavelength of the first optical signal transmitted by the tunable light source, and adjusting the target wavelength of the tunable filter. Every two adjacent wavelength adjustment procedures are performed at an interval of target duration, where the target duration is preset duration or random duration.

In each wavelength adjustment procedure, a change amount of the adjusted target wavelength relative to the target wavelength before adjustment is less than 10 nanometers; and a change amount of the adjusted wavelength of the first optical signal relative to the wavelength of the first optical signal before adjustment is less than 10 nanometers. One wavelength adjustment procedure may be completed in a short time period by executing a narrow adjustment process of the first optical signal and a narrow adjustment process of the target wavelength, thereby reducing a delay in completing a wavelength negotiation process.

For beneficial effects of the communication method in the fifth aspect, refer to beneficial effects of the single-fiber bidirectional optical module in the first aspect. Details are not described in this application.

According to a sixth aspect, an optical communication system is provided. The optical communication system may include at least one module, and the at least one module may be configured to implement the optical communication method provided in the fifth aspect or the possible implementations of the fifth aspect.

According to a seventh aspect, a computer-readable storage medium is provided. The computer-readable storage medium stores at least one piece of program code, and the program code is loaded and executed by a processor, to implement the optical communication method provided in the fifth aspect or the implementations of the fifth aspect.

According to an eighth aspect, a chip is provided. The chip includes a programmable logic circuit and/or program instructions, and when the chip runs, the chip is configured to perform the optical communication method provided in the fifth aspect or the possible implementations of the fifth aspect.

According to a ninth aspect, a computer program product is provided. The computer program product includes computer instructions, and the computer instructions are stored in a computer-readable storage medium. A processor of the computer program product may read the computer instructions from the computer-readable storage medium, and the processor executes the computer instructions, so that the computer program product performs the optical communication method provided in the fifth aspect or the possible implementations of the fifth aspect.

In conclusion, in the embodiments of this application, the single-fiber bidirectional optical module can adjust the wavelength of the first optical signal transmitted by the tunable light source, and adjust the target wavelength of the tunable filter, so that the adjusted target wavelength includes the adjusted wavelength of the first optical signal and does not include the wavelength of the second optical signal. In this way, the tunable filter can transmit the first optical signal from the tunable light source to the optical fiber port, and transmit the second optical signal from the optical fiber port to the receiver, thereby ensuring the transceiver function of the single-fiber bidirectional optical module. When the single-fiber bidirectional optical module is deployed and maintained in the optical communication system, because the single-fiber bidirectional optical module can ensure its transceiver function, the wavelength of the optical signal of the single-fiber bidirectional optical module does not need to be preplanned and be manually configured. This effectively simplifies deployment and maintenance of the single-fiber bidirectional optical module, reduces usage difficulty, improves usability, and improves deployment and maintenance efficiency.

In addition, in the embodiments of this application, structures of the single-fiber bidirectional optical modules in the optical communication system may be the same, a plurality of groups of target wavelengths supported by the tunable filters may be correspondingly the same, and a plurality of wavelengths supported by the tunable light sources may also be correspondingly the same. In this way, the single-fiber bidirectional optical modules in the optical communication system may be manufactured according to a unified standard. For example, the single-fiber bidirectional optical modules have a same model. For another example, the plurality of groups of target wavelengths supported by the tunable filters and the plurality of wavelengths supported by the tunable light sources may be uniformly configured. Costs of manufacturing the single-fiber bidirectional optical modules and costs of setting the wavelengths for the single-fiber bidirectional optical modules are reduced.

### BRIEF DESCRIPTION OF DRAWINGS

FIG. 1 is a schematic diagram of an application scenario of a single-fiber bidirectional optical module according to an embodiment of this application;
FIG. 2 is a schematic diagram of a structure of a single-fiber bidirectional optical module according to an embodiment of this application;
FIG. 3 is a schematic diagram of another structure of a single-fiber bidirectional optical module according to an embodiment of this application;
FIG. 4 is a schematic diagram of another structure of a single-fiber bidirectional optical module according to an embodiment of this application;
FIG. 5 is a schematic diagram of a structure of a communication apparatus according to an embodiment of this application;
FIG. 6 is a schematic diagram of another structure of an optical communication system according to an embodiment of this application;
FIG. 7 is a schematic diagram of still another structure of an optical communication system according to an embodiment of this application;
FIG. 8 is a schematic flowchart of an optical communication method according to an embodiment of this application; and
FIG. 9 is a schematic flowchart of a wavelength negotiation process according to an embodiment of this application.

### DESCRIPTION OF EMBODIMENTS

To make principles and technical solutions of this application clearer, the following further describes implementations of this application in detail with reference to accompanying drawings.

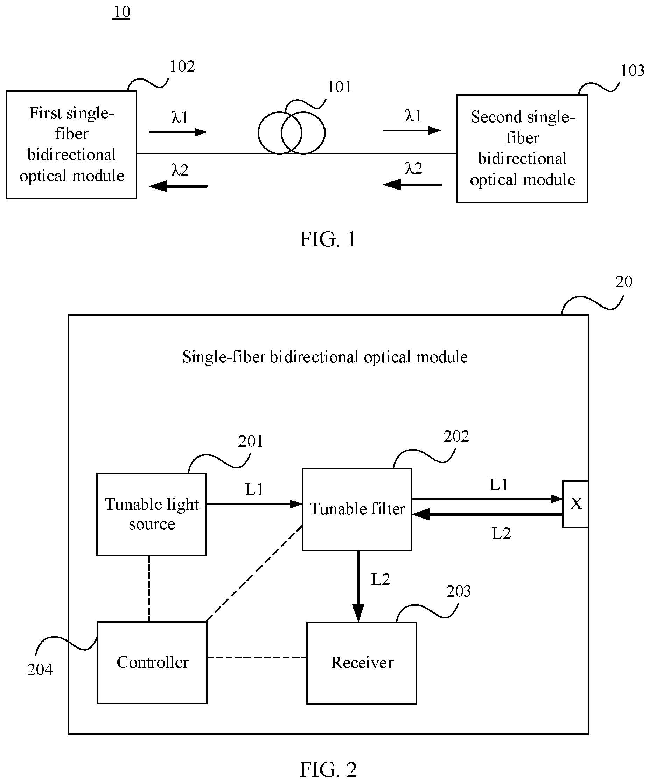

FIG. 1 is a schematic diagram of an application scenario of a single-fiber bidirectional optical module according to an embodiment of this application. In this application scenario, an optical communication system 10 includes an optical fiber 101, and two single-fiber bidirectional optical modules connected through the optical fiber 101. In FIG. 1, it is assumed that the two single-fiber bidirectional optical modules respectively are a first single-fiber bidirectional optical module 102 and a second single-fiber bidirectional optical module 103. The first single-fiber bidirectional optical module 102 is configured to: transmit a first optical signal, and receive a second optical signal. The second single-fiber bidirectional optical module 103 is configured to: receive the first optical signal, and transmit the second optical signal. In FIG. 1, it is assumed that a wavelength of the first optical signal is λ1, and a wavelength of the second optical signal is λ2.

Currently, when a single-fiber bidirectional optical module is deployed and maintained, wavelengths of optical signals of a pair of single-fiber bidirectional optical modules need to be preplanned, to ensure wavelength matching of the pair of single-fiber bidirectional optical modules. Consequently, deployment and maintenance of the single-fiber bidirectional optical module are complex, and this affects deployment and maintenance efficiency. For example, when the first single-fiber bidirectional optical module 102 in FIG. 1 is faulty, if some or all parts of the first single-fiber bidirectional optical module 102 need to be replaced, wavelengths of a first optical signal and a second optical signal of a first single-fiber bidirectional optical module 102 after replacement need to be manually preplanned, and wavelengths of optical signals of the two single-fiber bidirectional optical modules are manually configured, to ensure that a wavelength of an optical signal of the first single-fiber bidirectional optical module 102 after replacement matches a wavelength of an optical signal of the second single-fiber bidirectional optical module 103. Wavelength matching of the pair of single-fiber bidirectional optical modules means that the two single-fiber bidirectional optical modules each can receive an optical signal sent by the peer module. In other words, each single-fiber bidirectional optical module can effectively transmit and receive an optical signal.

An embodiment of this application provides a single-fiber bidirectional optical module. The single-fiber bidirectional optical module can adaptively adjust a wavelength of an optical signal inside the module. Therefore, a function of receiving and transmitting the optical signal can be implemented without preplanning a wavelength of the optical signal of the single-fiber bidirectional optical module. This effectively simplifies deployment and maintenance of the single-fiber bidirectional optical module, and improves deployment and maintenance efficiency. FIG. 2 is a schematic diagram of a structure of a single-fiber bidirectional optical module 20 according to an embodiment of this application. The single-fiber bidirectional optical module 20 may be used in the application scenario shown in FIG. 1, and may be the first single-fiber bidirectional optical module 102 or the second single-fiber bidirectional optical module 103. As shown in FIG. 2, the single-fiber bidirectional optical module 20 includes:
an optical fiber port X for connecting to an optical fiber, a tunable light source 201, a tunable filter (tunable filter) 202, a receiver 203, and a controller 204.

The single-fiber bidirectional optical module 20 may have a housing. The tunable light source 201, the tunable filter (tunable filter) 202, the receiver 203, and the controller 204 are located inside the housing. The housing is configured to protect the components inside the housing. The optical fiber port X is located on the housing, and the optical fiber may be inserted into the optical fiber port X from outside the housing. Alternatively, the single-fiber bidirectional optical module 20 is located inside a communication apparatus, the communication apparatus has a housing, the optical fiber port X is located on the housing, and the optical fiber may be inserted into the optical fiber port X from outside the housing.

The tunable light source 201 is configured to transmit a first optical signal L1 to the tunable filter 202. The tunable light source 201 is a wavelength-tunable light source and supports a plurality of wavelengths. A wavelength currently used by the tunable light source 201 may be switched among the plurality of wavelengths. For example, the tunable light source 201 is a tunable laser (tunable laser). Because the laser can transmit a laser signal with a high collimation degree, highly-efficient transmission of an optical signal over a long distance can be ensured. For example, the tunable light source may be a temperature-controlled light source, and a wavelength of the tunable light source is adjusted by adjusting a temperature. The tunable light source may alternatively be an electric-controlled light source, and a wavelength of the tunable light source is adjusted by adjusting a voltage. The tunable light source may alternatively be a magnetic-controlled light source, and a wavelength of the tunable light source is adjusted by adjusting magnetic force. Because the temperature-controlled light source has a simple structure and is easily controlled, the temperature-controlled light source may be widely used in a single-fiber bidirectional optical module.

The tunable filter 202 is configured to: transmit an optical signal of a target wavelength in the first optical signal L1 from the tunable light source 201 to the optical fiber port X, and transmit an optical signal of a wavelength other than the target wavelength in a second optical signal L2 from the optical fiber port X to the receiver 203. The tunable filter 202 is a filter whose target wavelength is tunable. The target wavelength is a wavelength of an optical signal that is allowed by the tunable filter 202 to directly pass through an original optical path. In other words, no optical path transition occurs when the optical signal of the target wavelength passes through the tunable filter 202. The target wavelength is also referred to as a pass-band of the tunable filter 202. The wavelength other than the target wavelength is a wavelength of an optical signal that is not allowed by the tunable filter 202 to directly pass through the original optical path. In this embodiment of this application, the tunable filter 202 sends the optical signal of the wavelength other than the target wavelength to the receiver in an optical path transition manner. The wavelength other than the target wavelength is also referred to as a stop-band of the tunable filter 202. For example, the tunable filter may be a temperature-controlled filter, and a target wavelength of the tunable filter is adjusted by adjusting a temperature. The tunable filter may alternatively be an electric-controlled filter, and a target wavelength of the tunable filter is adjusted by adjusting a voltage. The tunable filter may alternatively be a magnetic-controlled filter, and a target wavelength of the tunable filter is adjusted by adjusting magnetic force. Because the temperature-controlled filter has a simple structure and is easily controlled, the temperature-controlled filter may be widely used in a single-fiber bidirectional optical module.

The receiver 203 is configured to receive the optical signal transmitted by the tunable filter 202. For example, if the second optical signal L2 is input to the single-fiber bidirectional optical module from the optical fiber port X, and the optical signal of the wavelength other than the target wavelength exists in the second optical signal L2, the receiver 203 is configured to receive the optical signal of the wavelength other than the target wavelength that is in the second optical signal L2 and that is transmitted by the tunable filter 202. In this embodiment of this application, a wavelength receiving range supported by the receiver 203 is wide. In this way, it can be ensured that the receiver 203 can effectively receive the second optical signal, provided that the tunable filter 202 can transmit the second optical signal to the receiver 203 regardless of whether a wavelength of the second optical signal changes.

The controller 204 is configured to adjust a wavelength of the first optical signal L1 transmitted by the tunable light source 201, and adjust the target wavelength of the tunable filter 202, so that an adjusted target wavelength includes an adjusted wavelength of the first optical signal L1 and does not include the wavelength of the second optical signal L2. That the target wavelength includes a wavelength of an optical signal is also referred to as that the target wavelength matches the wavelength of the optical signal. That the target wavelength does not include a wavelength of an optical signal is also referred to as that the target wavelength does not match the wavelength of the optical signal. Therefore, an objective of performing wavelength adjustment by the controller 204 is to enable the adjusted target wavelength to match the wavelength of the first optical signal L1 and not to match the wavelength of the second optical signal L2.

In this embodiment of this application, a process of adjusting the wavelength of the first optical signal transmitted by the tunable light source and adjusting the target wavelength of the tunable filter is referred to as a wavelength adjustment procedure. The controller may perform one or more wavelength adjustment procedures, to achieve an objective that the adjusted target wavelength matches the wavelength of the first optical signal and does not match the wavelength of the second optical signal. For example, the controller may perform at least two wavelength adjustment procedures until the adjusted target wavelength includes the adjusted wavelength of the first optical signal and does not include the wavelength of the second optical signal. It should be noted that, because the second optical signal is an optical signal transmitted by a peer single-fiber bidirectional optical module, a process in which the controller executes the wavelength adjustment procedure is equivalent to a process in which two single-fiber bidirectional optical modules negotiate receive/transmit optical signals adapted to each other, to implement a transceiver function of each of the modules. Therefore, the process may also be referred to as a wavelength negotiation process.

FIG. 2 shows optical paths of the first optical signal L1 and the second optical signal L2 after the wavelength adjustment procedure is completed. As shown in FIG. 2, the tunable filter 202 can transmit the first optical signal L1 from the tunable light source 201 to the optical fiber port X, to implement sending of the first optical signal L1; and transmit the second optical signal L2 from the optical fiber port X to the receiver 203, to implement receiving of the second optical signal L2. In this way, a transceiver function of the single-fiber bidirectional optical module 20 is ensured. For example, the controller 204 may include one or more processing cores. For example, the processor is a 4-core processor, an 8-core processor, or the like. Alternatively, the controller 204 may be implemented in at least one hardware form of an FPGA (Field-Programmable Gate Array, field programmable gate array) or a PLA (Programmable Logic Array, programmable logic array). Alternatively, the controller 204 may alternatively be a CPU (Central Processing Unit, central processing unit) or a microcontroller unit (Microcontroller Unit, MCU).

In this embodiment of this application, the single-fiber bidirectional optical module can adjust the wavelength of the first optical signal transmitted by the tunable light source, and adjust the target wavelength of the tunable filter, so that the adjusted target wavelength includes the adjusted wavelength of the first optical signal and does not include the wavelength of the second optical signal. In this way, the tunable filter can transmit the first optical signal from the tunable light source to the optical fiber port, and transmit the second optical signal from the optical fiber port to the receiver, thereby ensuring the transceiver function of the single-fiber bidirectional optical module. When the single-fiber bidirectional optical module is deployed and maintained in an optical communication system, because the single-fiber bidirectional optical module can ensure its transceiver function, a wavelength of an optical signal of the single-fiber bidirectional optical module does not need to be preplanned and be manually configured. This effectively simplifies deployment and maintenance of the single-fiber bidirectional optical module, and improves deployment and maintenance efficiency.

In this embodiment of this application, the tunable filter 202 supports a plurality of groups of target wavelengths, and each group of target wavelengths includes one or more wavelengths. A target wavelength currently used by the tunable filter 202 may be switched among the plurality of groups of target wavelengths. For example, the tunable filter 202 may be a comb filter (Cascaded integrator-comb filter, CIC). The comb filter has a plurality of pass-bands and stop-bands arranged at a specific wavelength spacing (or a frequency spacing). Characteristic curves of the comb filter are in a comb-tooth-like structure. Therefore, the filter is referred to as a comb filter. A process of adjusting a target wavelength of the comb filter may be a process of changing positions of the pass-bands and the stop-bands of the comb filter.

Optionally, the plurality of wavelengths supported by the tunable light source 201 one-to-one correspond to the plurality of groups of target wavelengths supported by the tunable filter 202, and each wavelength supported by the tunable light source 201 belongs to a group of target wavelengths supported by the corresponding tunable filter 202. In this way, regardless of an extent to which the wavelength of the first optical signal L1 transmitted by the tunable light source 201 is adjusted, it can be ensured that a corresponding target wavelength may be selected from the plurality of groups of target wavelengths supported by the tunable filter 202, so that the adjusted target wavelength includes the adjusted wavelength of the first optical signal L1. In addition, when each group of target wavelengths includes the plurality of wavelengths, a range of the target wavelength is wide. Therefore, a range of a tunable wavelength of the tunable light source 201 is wide, and adjustment is correspondingly simplified. In addition, the plurality of wavelengths supported by the tunable light source 201 are different from each other, and the plurality of groups of target wavelengths supported by the tunable filter 202 do not overlap each other. In this way, a quantity of times of invalid wavelength adjustment procedures is reduced. The invalid wavelength adjustment procedure means that the adjusted target wavelength does not match the wavelength of the first optical signal, and/or matches the wavelength of the second optical signal.

In this embodiment of this application, the controller 204 can adjust the wavelength of the first optical signal L1 transmitted by the tunable light source 201, and adjust the target wavelength of the tunable filter 202 based on a one-to-one correspondence between the plurality of wavelengths supported by the tunable light source 201 and the plurality of groups of target wavelengths supported by the tunable filter 202, so that the adjusted target wavelength includes the adjusted wavelength of the first optical signal L1. The correspondence may be recorded in a memory corresponding to the controller 204. For example, the wavelengths supported by the tunable light source are λ1 to λr, where r is an integer greater than 1. Correspondingly, the target wavelengths supported by the tunable filter are λ1 ± n T1 to λr ± n Tr, where n ≥ 0, n is an integer, and T1 to Tr are preset wavelength spacings. Therefore, λ1 ± n T1 includes λ1; λ2 ± n T2 includes λ2; ...; and λr ± n Tr includes λr. Optionally, because a wavelength spacing of a tunable filter is usually a fixed value, costs of using and manufacturing the tunable filter both are low. This requires that T1 = T2 = ... = Tr.

For example, the correspondence may be stored in a table. Table 1 is a table of the correspondence between the plurality of wavelengths supported by the tunable light source 201 and the plurality of groups of target wavelengths supported by the tunable filter 202 according to the embodiment of this application. Details are shown in Table 1. It is assumed that r = 3, therefore, the wavelengths supported by the tunable light source are λ1, λ2, and λ3; and correspondingly, the target wavelengths supported by the tunable filter are λ1 ± n T1, λ2 ± n T2, and λ3 ± n T3. T1, T2, and T3 are preset wavelength spacings. It can be learned from Table 1 that λ1 ± n T1 includes λ1; λ2 ± n T2 includes λ2; and λ3 ± n T3 includes λ3.

**Table 1**

| Wavelengths supported by the tunable light source | Target wavelengths supported by the tunable filter |
|---|---|
| λ1 | λ1 ± n T1 |
| λ2 | λ2 ± n T2 |
| λ3 | λ3 ± n T3 |

In an optional example, in the foregoing wavelengths λ1 to λr, an absolute value Q of a difference between every two adjacent wavelengths is less than 10 nanometers, for example, 0.1 nm ≤ Q ≤ 1 nm. Therefore, in each wavelength adjustment procedure, when switching of the wavelength of the first optical signal among the wavelengths λ1 to λr is performed, a change amount of the adjusted wavelength of the first optical signal relative to the wavelength of the first optical signal before adjustment may be controlled to Q, in other words, the change amount is less than 10 nanometers. In this way, it can be implemented that only a small range of the wavelength of the first optical signal is adjusted in each wavelength adjustment process. This process is also referred to as a narrow adjustment process of the wavelength of the first optical signal. Similarly, in the foregoing target wavelengths from λ1 ± n T1 to λr ± n Tr, an absolute value P of a difference between two wavelengths in every two adjacent groups of target wavelengths that belong to different groups of target wavelengths and that are closest to each other is less than 10 nanometers. For example, the first target wavelength includes λ1, λ1 ± T1, λ1 ± 2 T1, and the like. The second target wavelength includes λ2, λ2 ± T2, λ2 ± 2 T2, and the like. For the wavelength λ1 in the first target wavelength, the wavelength λ2 in the second target wavelength is closest to the wavelength λ1. In this case, P = |λ1 - λ2|, for example, 0.1 nm ≤ P ≤ 1 nm. Therefore, in each wavelength adjustment procedure, when switching of the target wavelength among λ1 ± n T1 to λr ± n Tr is performed, a change amount of the adjusted target wavelength relative to the target wavelength before adjustment may be controlled to P, in other words, the change amount is less than 10 nanometers. In this way, it can be implemented that only a small range of the target wavelength is adjusted in each wavelength adjustment process. This process is also referred to as a narrow adjustment process of the target wavelength. One wavelength adjustment procedure may be completed in a short time period by executing the narrow adjustment process of the first optical signal and the narrow adjustment process of the target wavelength, thereby reducing a delay in completing the wavelength negotiation process.

It should be noted that, when T1 = T2 = ... = Tr, the absolute value Q of the difference between every two adjacent wavelengths is equal to the absolute value of P of the difference between the two wavelengths in every two adjacent groups of target wavelengths that belong to the different groups of target wavelengths and that are closest to each other. In this case, executing the narrow adjustment process of the target wavelength each time is equivalent to performing overall horizontal removal of a current group of target wavelengths by the change amount P.

For any single-fiber bidirectional optical module in a pair of single-fiber bidirectional optical modules in the optical communication system, each group of target wavelengths used by the single-fiber bidirectional optical module needs to include a wavelength supported by a tunable light source (namely, the wavelength of the first optical signal), and does not include a wavelength supported by a tunable light source of a peer single-fiber bidirectional optical module (namely, the wavelength of the second optical signal). In this way, it can be ensured that after the pair of single-fiber bidirectional optical modules complete a wavelength negotiation process, an adjusted target wavelength matches the wavelength of the first optical signal L1 and does not match the wavelength of the second optical signal L2.

In an optional implementation, a plurality of groups of target wavelengths supported by tunable filters 202 of the pair of single-fiber bidirectional optical modules are correspondingly the same. In addition, a plurality of wavelengths supported by tunable light sources of the pair of single-fiber bidirectional optical modules are in a one-to-one correspondence. The wavelengths supported by the tunable light sources of the pair of single-fiber bidirectional optical modules belong to a same group of target wavelengths. As shown in Table 2, it is assumed that the pair of single-fiber bidirectional optical modules are respectively a first single-fiber bidirectional optical module and a second single-fiber bidirectional optical module, the plurality of groups of target wavelengths supported by the tunable filters 202 of the two modules are respectively λ1 ± n T1 and λ2 ± n T2, where n ≥ 1; the wavelengths supported by the tunable light source of the first single-fiber bidirectional optical module are respectively λ1 and λ2; and the wavelengths supported by the tunable light source of the second single-fiber bidirectional optical module are respectively λ1 + T1 and λ2 + T2. It can be learned from Table 2 that λ1 one-to-one corresponds to λ1 + T1, and λ1 ± n T1 includes λ1 and λ1 + T1; and λ2 one-to-one corresponds to λ2 + T2, and λ2 ± n T2 includes λ2 and λ2 + T2.

**Table 2**

| Wavelengths supported by a tunable light source of a first single-fiber bidirectional optical module | Wavelengths supported by a tunable light source of a second single-fiber bidirectional optical module | Target wavelengths supported by a tunable filter |
|---|---|---|
| λ1 | λ1 + T1 | λ1 ± n T1 |
| λ2 | λ2 + T2 | λ2 ± n T2 |

It is assumed that a first correspondence of the first single-fiber bidirectional optical module includes a correspondence between a first wavelength and a first target wavelength, and a correspondence between a second wavelength and a second target wavelength. The first wavelength is different from the second wavelength, and the first target wavelength and the second target wavelength do not overlap. A second correspondence of the second single-fiber bidirectional optical module includes a correspondence between a third wavelength and the first target wavelength, and a correspondence between a fourth wavelength and the second target wavelength. The third wavelength is different from the fourth wavelength. For the first single-fiber bidirectional optical module, when the second wavelength is switched to from the first wavelength of the tunable light source based on the foregoing first correspondence, and the second target wavelength is switched to from the first target wavelength of the tunable filter, if a wavelength of the tunable light source of the second single-fiber bidirectional optical module is the third wavelength and a target wavelength of the tunable filter of the second single-fiber bidirectional optical module is the first target wavelength, the second target wavelength of the first single-fiber bidirectional optical module includes the second wavelength and does not include the third wavelength. In this way, the wavelength negotiation process is completed. It can be learned that such setting can implement fast wavelength negotiation. In addition, when the pair of single-fiber bidirectional optical modules is manufactured, the plurality of groups of target wavelengths supported by the tunable filters 202 may be uniformly configured. Costs of setting the wavelengths for the single-fiber bidirectional optical modules are reduced.

Optionally, the plurality of wavelengths supported by the tunable light sources of the pair of single-fiber bidirectional optical modules are also correspondingly the same. For example, in the pair of single-fiber bidirectional optical modules, for the plurality of groups of target wavelengths supported by the tunable filter 202 of each single-fiber bidirectional optical module, refer to Table 1; and for the plurality of wavelengths supported by the tunable light source of each single-fiber bidirectional optical module, refer to Table 1. Refer to the foregoing examples. The third wavelength is the same as the first wavelength, and the fourth wavelength is the same as the second wavelength. For the first single-fiber bidirectional optical module, when the second wavelength is switched to from the first wavelength of the tunable light source, and the second target wavelength is switched to from the first target wavelength of the tunable filter, if the wavelength of the tunable light source of the second single-fiber bidirectional optical module is the first wavelength, and the target wavelength of the tunable filter of the second single-fiber bidirectional optical module is the first target wavelength, the second target wavelength of the first single-fiber bidirectional optical module includes the second wavelength and does not include the first wavelength. In this way, the wavelength negotiation process is completed. In this way, when the pair of single-fiber bidirectional optical modules is manufactured, the plurality of groups of target wavelengths supported by the tunable filters 202 and the plurality of wavelengths supported by the tunable light sources may be uniformly configured. Costs of setting the wavelengths for the single-fiber bidirectional optical modules are reduced.

Further, a larger quantity of wavelengths supported by the tunable light sources 201 of the pair of single-fiber bidirectional optical modules indicates a lower probability of successful wavelength negotiation after a small quantity of wavelength adjustment procedures are performed by the pair of single-fiber bidirectional optical modules. Therefore, the tunable light source 201 of each single-fiber bidirectional optical module may support two wavelengths, and correspondingly, the tunable filter 202 of each single-fiber bidirectional optical module supports two groups of target wavelengths. In this way, on a premise that the single-fiber bidirectional optical modules can execute the wavelength adjustment procedures, a probability of successfully performing highly-efficient wavelength negotiation is effectively improved.

Further, when the tunable filter 202 is the comb filter, the two groups of target wavelengths supported by the comb filter are complementary (also referred to as opposite). For example, it is assumed that the two groups of target wavelengths include a first group of wavelengths and a second group of wavelengths, when the comb filter adjusts pass-bands to the first group of wavelengths, stop-bands are the second group of wavelengths; and when the comb filter adjusts the pass-bands to the second group of wavelengths, the stop-bands are the first group of wavelengths.

It should be noted that the plurality of wavelengths supported by the tunable light source 201 of the single-fiber bidirectional optical module and the plurality of groups of target wavelengths supported by the tunable filter 202 may alternatively be configured in another manner, provided that it can be ensured that the single-fiber bidirectional optical module performs successful wavelength negotiation after performing one or more wavelength adjustment procedures. This is not limited in this embodiment of this application.

In this embodiment of this application, the wavelength adjustment procedure may have a plurality of trigger mechanisms. In this embodiment of this application, the following three trigger mechanisms are used as examples for description:

In a first trigger mechanism, a trigger condition is that the controller 204 receives a wavelength adjustment instruction. To be specific, the controller 204 is configured to: after receiving the wavelength adjustment instruction, adjust the wavelength of the first optical signal L1 transmitted by the tunable light source 201, and adjust the target wavelength of the tunable filter 202. In an implementation, the single-fiber bidirectional optical module 20 has a control button, and the wavelength adjustment instruction may be triggered by pressing the control button. For example, after installing the single-fiber bidirectional optical module 20, a worker may press the control button, and correspondingly, the controller 204 receives the wavelength adjustment instruction. In another implementation, the single-fiber bidirectional optical module 20 is connected to a communication module, the wavelength adjustment instruction may be triggered by a control apparatus and sent to the communication module, and the communication module transmits the wavelength adjustment instruction to the controller. For example, after installing the single-fiber bidirectional optical module 20, the worker may send the wavelength adjustment instruction to the communication module of the single-fiber bidirectional optical module 20 by using the control apparatus. Correspondingly, the controller 204 receives the wavelength adjustment instruction by using the communication module. Optionally, the communication module may be a short-range communication module, for example, a wireless fidelity (Wireless Fidelity, Wi-Fi) module, a near field communication (Near Field Communication, NFC) module, or a Bluetooth module.

In a second trigger mechanism, the trigger condition is that the controller 204 determines that the target wavelength does not include the wavelength of the first optical signal L1. To be specific, after determining that the target wavelength does not include the wavelength of the first optical signal L1, the controller 204 adjusts the wavelength of the first optical signal L1 transmitted by the tunable light source 201, and adjusts the target wavelength of the tunable filter 202. If the target wavelength does not include the wavelength of the first optical signal L1, the tunable filter 202 transmits the first optical signal L1 from the tunable light source to the receiver 203. In this way, the first optical signal L1 does not arrive at the optical fiber port X, and a sending function of the single-fiber bidirectional optical module 20 cannot be implemented. In this case, the normal sending function of the single-fiber bidirectional optical module 20 is ensured by adjusting a wavelength. However, as described above, each time the controller 204 performs wavelength adjustment, the wavelength of the first optical signal L1 and the target wavelength are adjusted synchronously, and there is a one-to-one correspondence between the wavelengths after adjustment. Therefore, generally, a case in which the target wavelength does not include the wavelength of the first optical signal L1 does not exist, and the controller 204 does not need to detect the trigger condition.

In a third trigger mechanism, the trigger condition is that the controller 204 determines that the target wavelength includes the wavelength of the second optical signal L2. To be specific, the controller 204 is configured to: after determining that the target wavelength includes the wavelength of the second optical signal L2, adjust the wavelength of the first optical signal L1 transmitted by the tunable light source 201, and adjusts the target wavelength of the tunable filter 202. If the target wavelength includes the wavelength of the second optical signal L2, the tunable filter 202 transmits, according to an optical path reversibility principle, the second optical signal L2 from the optical fiber port X to the tunable light source 201. In other words, the second optical signal L2 directly passes through the tunable filter 202 on the original optical path. In this way, the second optical signal L2 does not arrive at the receiver 203, and a receiving function of the single-fiber bidirectional optical module 20 cannot be implemented. In this case, the normal receiving function of the single-fiber bidirectional optical module 20 is ensured by adjusting a wavelength.

It should be noted that, each time after the single-fiber bidirectional optical module is powered on, the controller 204 may start to detect whether a status of the target wavelength of the tunable filter 202 meets the foregoing trigger condition. In this way, automatic wavelength negotiation is implemented after the single-fiber bidirectional optical module is powered on without a manual operation, and wavelength negotiation efficiency is improved.

In the third trigger mechanism, the controller 204 may detect, in a plurality of manners, whether the target wavelength includes the wavelength of the second optical signal. For example, the controller 204 may determine, by detecting whether both the optical fiber port X and the receiver 203 have optical signal input, whether the target wavelength includes the wavelength of the second optical signal. That the optical fiber port X has the optical signal input means that the second optical signal L2 is input to the optical fiber port X through an optical fiber; and that the receiver 203 has the optical signal input means that the second optical signal L2 is transmitted by the tunable filter 202. When both the optical fiber port X and the receiver 203 have the optical signal input, it indicates that the tunable filter 202 inputs the second optical signal L2 input from the optical fiber port X to the receiver 203, and therefore, the target wavelength does not include the wavelength of the second optical signal. When the optical fiber port X has the optical signal input, but the receiver 203 has no optical signal input, it indicates that the tunable filter 202 inputs the second optical signal L2 input from the optical fiber port X to the tunable light source 201, but does not input the second optical signal L2 to the receiver 203, and therefore, the target wavelength includes the wavelength of the second optical signal.

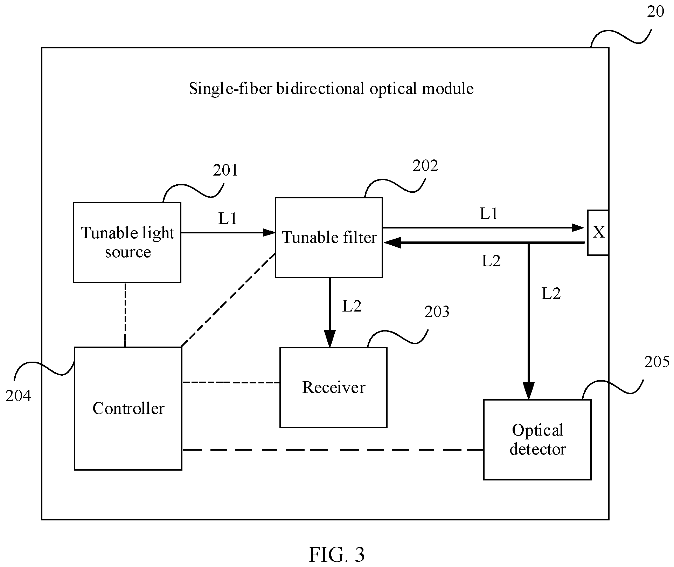

The receiver 203 generally includes an optical detector that may detect an optical signal. An optical signal of the optical fiber port X may be transmitted by disposing an optical detector between the tunable filter 202 and the optical fiber port X in the single-fiber bidirectional optical module. FIG. 3 is a schematic diagram of another structure of the single-fiber bidirectional optical module 20 according to an embodiment of this application. As shown in FIG. 3, the single-fiber bidirectional optical module 20 further includes an optical detector 205. It is assumed that before the wavelength of the first optical signal transmitted by the tunable light source 201 is adjusted and the target wavelength of the tunable filter 202 is adjusted, the target wavelength includes the wavelength of the first optical signal, therefore, the optical detector 205 is configured to detect the second optical signal L2 from the optical fiber port X. The controller 204 is configured to: when the optical detector 205 detects the optical signal and the receiver 203 detects no optical signal, determine that the target wavelength includes the wavelength of the second optical signal L2. It should be noted that, that an optical signal is detected means that an optical power of the detected optical signal is greater than an optical power threshold; and that no optical signal is detected means that the optical power of the detected optical signal is not greater than the optical power threshold. In this embodiment of this application, whether the target wavelength includes the wavelength of the second optical signal is detected by using the optical detector 205 and the receiver 203, to quickly identify whether the target wavelength matches the wavelength of the second optical signal.

Optionally, both the optical detector in the receiver 203 and the optical detector 205 may be a photodiode detector (Photodiode Detector, PD), an avalanche photodiode detector (Avalanche Photodiode Detector, APD), or another photoelectric conversion module.

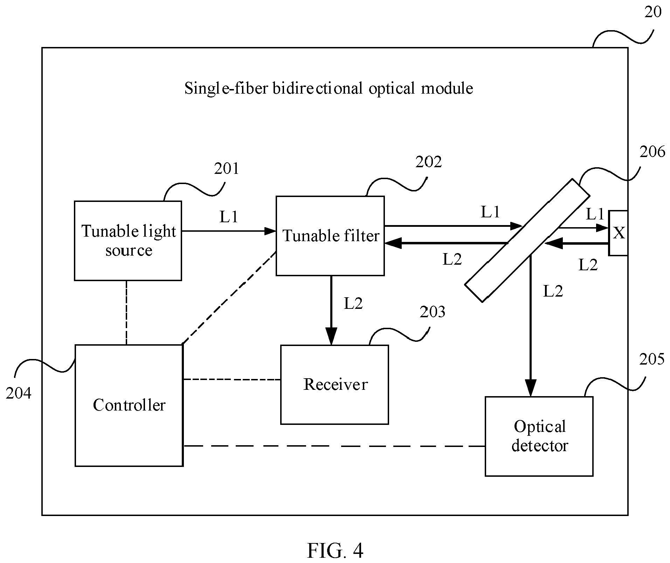

FIG. 4 is a schematic diagram of another structure of the single-fiber bidirectional optical module 20 according to an embodiment of this application. As shown in FIG. 4, the single-fiber bidirectional optical module 20 further includes an optical splitter 206 located between the tunable filter 202 and the optical fiber port X. The optical splitter 206 is configured to transmit one part of the second optical signal L2 from the optical fiber port X to the tunable filter 202, and transmit the other part to the optical detector 205. The optical detector 205 is configured to detect the optical signal transmitted by the optical splitter 206. The optical splitter is set, so that the one part of the second optical signal transmitted on a main path (namely, an optical path between the optical fiber port X and the tunable filter 202) is output to the optical detector 205 from a tributary path (namely, an optical path between the optical splitter 206 and the optical detector 205), to reduce impact on the second optical signal transmitted on the main path. For example, the optical splitter 206 introduces the second optical signal into the tributary path for transmission at a specific optical splitting ratio, for example, the optical splitting ratio is less than or equal to 10%.

The optical splitter 206 may be a coupler, a divider, a demultiplexer, or another optical splitting structure. Costs of manufacturing the demultiplexer are low, and costs can be effectively reduced by deploying the demultiplexer in the single-fiber bidirectional optical module. In FIG. 4, an example in which the optical splitter 206 is the demultiplexer is used, but a specific structure of the optical splitter is not limited.

It should be noted that, in the pair of single-fiber bidirectional optical modules used for optical signal exchange in the optical communication system, when one single-fiber bidirectional optical module executes a wavelength adjustment procedure, the other single-fiber bidirectional optical module may execute a wavelength adjustment procedure at the same time. In this way, if the wavelength adjustment procedures of the two single-fiber bidirectional optical modules are performed synchronously, for any single-fiber bidirectional optical module, if there are a large quantity of cases in which the adjusted target wavelength matches the wavelength of the second optical signal, the objective of wavelength adjustment cannot be quickly achieved. To reduce a quantity of times of performing the wavelength adjustment procedure of the single-fiber bidirectional optical module, when the controller 204 executes the at least two wavelength adjustment procedures, every two adjacent wavelength adjustment procedures is set are performed at an interval of target duration. In an optional manner, the target duration is preset duration, the target duration is different from target duration of the peer single-fiber bidirectional optical module (namely, a transmit end of the second optical signal), and an interval of specified duration may be set between the two target duration. The target duration may be preset fixed duration, or may be preset variable duration. For example, the variable duration is duration that changes according to a specific rule. For example, the target duration is duration that increases by an equal proportion or an equal difference. It is assumed that the target duration is duration that increases by an equal difference of 0.5, therefore, a difference between an interval of duration between two wavelength adjustment procedures and a last interval of duration is 0.5, in other words, the controller gradually increases the interval of duration by 0.5, 1, 1.5, and the like. In another optional manner, the target duration is random duration. In the foregoing two optional implementations, execution moments of the wavelength adjustment procedures of the two single-fiber bidirectional optical modules are staggered, so that the wavelength adjustment procedures of the two single-fiber bidirectional optical modules are not executed synchronously. In this way, the quantity of times of performing the wavelength adjustment procedures of the two single-fiber bidirectional optical modules is reduced.

In a fourth trigger mechanism, the trigger condition is that the controller 204 determines that the optical fiber port does not input the second optical signal L2. To be specific, the controller 204 is configured to: after determining that the optical fiber port does not input the second optical signal L2, adjust the wavelength of the first optical signal L1 transmitted by the tunable light source 201, and adjust the target wavelength of the tunable filter 202. When the optical fiber port does not input the second optical signal, it indicates that the peer single-fiber bidirectional optical module does not execute a signal sending function of the peer single-fiber bidirectional optical module. On one hand, the peer single-fiber bidirectional optical module may not be powered on; and on the other hand, the peer single-fiber bidirectional optical module may perform an invalid wavelength adjustment procedure. Therefore, the controller 204 may trigger execution of the wavelength adjustment procedure, and perform one or more wavelength adjustment procedures to wait for the peer single-fiber bidirectional optical module to test its transceiver function, thereby implementing successful wavelength negotiation with the peer single-fiber bidirectional optical module.

In conclusion, in this embodiment of this application, the single-fiber bidirectional optical module can adjust the wavelength of the first optical signal transmitted by the tunable light source, and adjust the target wavelength of the tunable filter, so that the adjusted target wavelength includes the adjusted wavelength of the first optical signal and does not include the wavelength of the second optical signal. In this way, the tunable filter can transmit the first optical signal from the tunable light source to the optical fiber port, and transmit the second optical signal from the optical fiber port to the receiver, thereby ensuring the transceiver function of the single-fiber bidirectional optical module. When the single-fiber bidirectional optical module is deployed and maintained in the optical communication system, because the single-fiber bidirectional optical module can ensure its transceiver function, the wavelength of the optical signal of the single-fiber bidirectional optical module does not need to be preplanned and be manually configured. This effectively simplifies deployment and maintenance of the single-fiber bidirectional optical module, and improves deployment and maintenance efficiency.

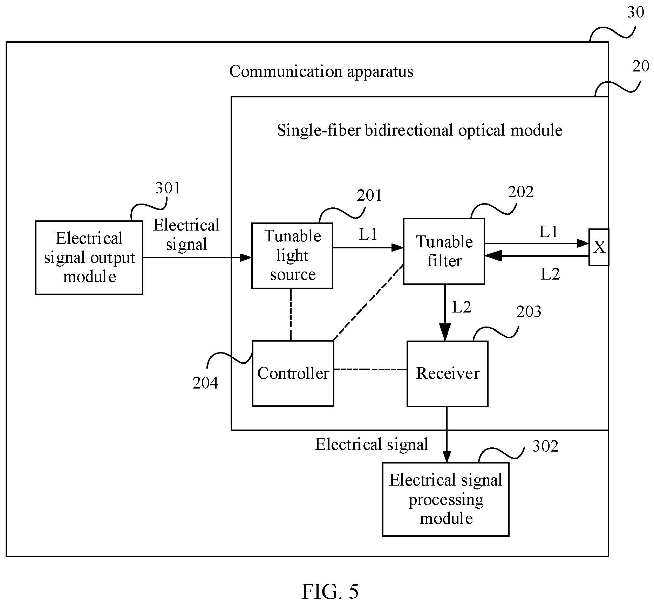

FIG. 5 is a schematic diagram of a structure of a communication apparatus 30 according to an embodiment of this application. The communication apparatus 30 may be a network device, for example, a router or a switch. As shown in FIG. 5, the communication apparatus 30 includes any single-fiber bidirectional optical module 20 provided in the embodiments of this application, an electrical signal generation module 301, and an electrical signal processing module 302. The electrical signal generation module 301 is connected to the tunable light source 201, and the electrical signal generation module 301 is configured to input an electrical signal to the tunable light source 201. The electrical signal processing module 302 is connected to the receiver 203, the receiver 203 is further configured to output an electrical signal to the electrical signal processing module 302 based on a received optical signal, and the electrical signal processing module 302 is configured to process the received electrical signal. The electrical signal input by the electrical signal generation module 301 to the tunable light source 201 is generally different from the electrical signal received by the electrical signal processing module 302.

For example, the electrical signal generation module 301 includes a first processing module and a digital-to-analog conversion module. The first processing module is configured to receive an electrical signal output by a signal source, and output a digital signal based on the electrical signal. The digital-to-analog conversion module is configured to convert the digital signal output by the first processing module into an analog signal. The tunable light source 201 is configured to perform modulation on an optical signal based on the analog signal, to obtain the first optical signal. The digital-to-analog conversion module may be a digital-to-analog conversion (digital-to-analog conversion, DAC) chip or a parallel converter (serdes).

The electrical signal processing module 302 includes an analog-to-digital conversion module and a second processing module. The receiver 203 is an optical-to-electrical conversion module, and may convert the second optical signal sent by the tunable filter 202 into an analog signal. The analog-to-digital conversion module is configured to convert the analog signal output by the receiver 203 into a digital signal. The second processing module is configured to obtain an electrical signal based on the digital signal output by the analog-to-digital conversion module. A process of converting an analog signal into a digital signal may include: performing analog-to-digital conversion (analog-to-digital conversion, ADC) sampling on a received analog signal to obtain a digital signal; or performing clock data recovery (clock data recovery, CDR) sampling on a received analog signal to obtain a digital signal. The analog-to-digital conversion module may be an ADC chip or a CDR chip.

It should be noted that the electrical signal generation module 301 and the electrical signal processing module 302 may alternatively have other implementations. The foregoing embodiment is merely an example for description. This is not limited in this embodiment of this application. The communication apparatus 30 may perform communication based on a code division multiple access (Code Division Multiple Access, CDMA) technology, a frequency division multiple access (frequency division multiple access, FDMA) technology, or a time division multiple access (Time division multiple access, TDMA) technology.

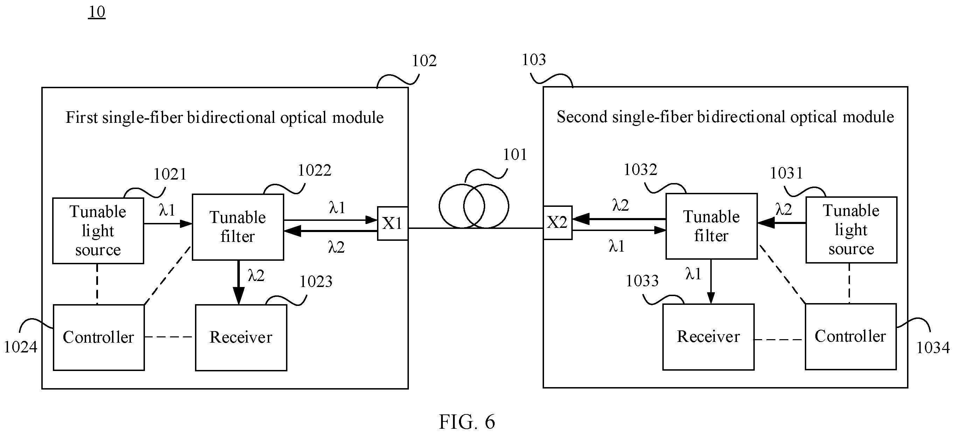

An embodiment of this application provides an optical communication system. The optical communication system includes two single-fiber bidirectional optical modules connected through an optical fiber. The two single-fiber bidirectional optical modules both include a single-fiber bidirectional optical module provided in the embodiments of this application, for example, the foregoing single-fiber bidirectional optical module. For a structure of the optical communication system, refer to FIG. 1. FIG. 6 is a schematic diagram of another structure of an optical communication system according to an embodiment of this application. In FIG. 6, an optical communication system 10 includes an optical fiber 101, and a first single-fiber bidirectional optical module 102 and a second single-fiber bidirectional optical module 103 that are connected through the optical fiber 101. The first single-fiber bidirectional optical module 102 includes an optical fiber port X1 for connecting to the optical fiber, a tunable light source 1021, a tunable filter 1022, a receiver 1023, and a controller 1024. For corresponding functions, refer to the optical fiber port X, the tunable light source 201, the tunable filter 202, the receiver 203, and the controller 204 in the single-fiber bidirectional optical module 20. The second single-fiber bidirectional optical module 103 includes an optical fiber port X2 for connecting to the optical fiber, a tunable light source 1031, a tunable filter 1032, a receiver 1033, and a controller 1034. For corresponding functions, refer to the optical fiber port X, the tunable light source 201, the tunable filter 202, the receiver 203, and the controller 204 in the single-fiber bidirectional optical module 20. The first single-fiber bidirectional optical module 102 and the second single-fiber bidirectional optical module 103 both can execute a wavelength adjustment procedure. FIG. 6 shows optical paths in the first single-fiber bidirectional optical module 102 and the second single-fiber bidirectional optical module 103 after the wavelength adjustment procedures are completed. A first optical signal transmitted by the first single-fiber bidirectional optical module 102 is a second optical signal received by the second single-fiber bidirectional optical module 103, and in FIG. 6, it is assumed that a wavelength of the optical signal is λ1. A second optical signal received by the first single-fiber bidirectional optical module 102 is a first optical signal transmitted by the second single-fiber bidirectional optical module 103, and in FIG. 6, it is assumed that a wavelength of the optical signal is λ2.

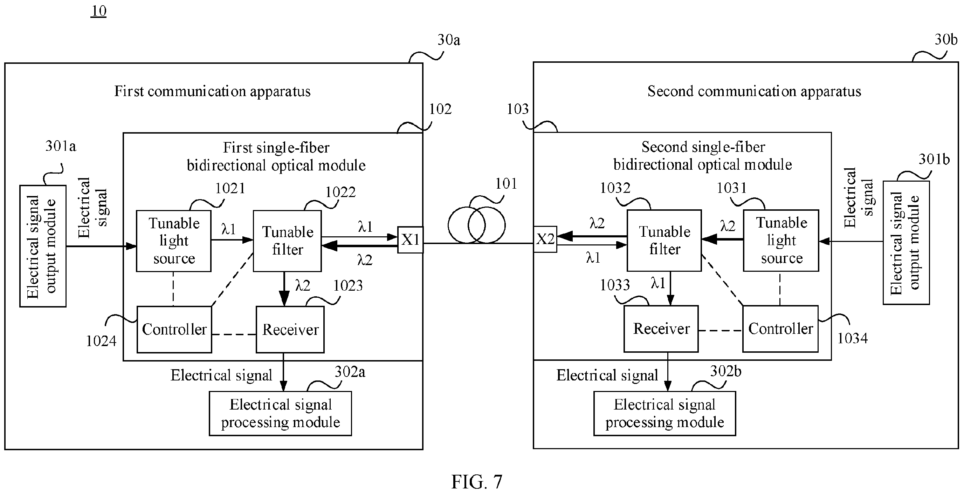

FIG. 7 is a schematic diagram of still another structure of an optical communication system according to an embodiment of this application. The optical communication system 10 includes the optical fiber 101, and two communication apparatuses connected through the optical fiber 101. The two communication apparatuses both include the communication apparatus 30 described in the foregoing embodiment. For example, it is assumed that the two communication apparatuses are respectively a first communication apparatus 30a and a second communication apparatus 30b, therefore, the first communication apparatus 30a includes an electrical signal generation module 301a, an electrical signal processing module 302a, and the first single-fiber bidirectional optical module 102. For functions of the electrical signal generation module 301a and the electrical signal processing module 302a, refer to functions of the electrical signal generation module 301 and the electrical signal processing module 302 shown in FIG. 5. For a function of the first single-fiber bidirectional optical module 102, refer to a function of the first single-fiber bidirectional optical module 102 shown in FIG. 6. The second communication apparatus 30b includes an electrical signal generation module 301b, an electrical signal processing module 302b, and the second single-fiber bidirectional optical module 103. For functions of the electrical signal generation module 301b and the electrical signal processing module 302b, refer to the functions of the electrical signal generation module 301 and the electrical signal processing module 302 shown in FIG. 5. For a function of the second single-fiber bidirectional optical module 102, refer to a function of the second single-fiber bidirectional optical module 103 shown in FIG. 6.

For example, in FIG. 6 and FIG. 7, a plurality of groups of target wavelengths supported by tunable filters of the first single-fiber bidirectional optical module 102 and the second single-fiber bidirectional optical module 103 are correspondingly the same. In addition, a plurality of wavelengths supported by tunable light sources of the first single-fiber bidirectional optical module 102 and the second single-fiber bidirectional optical module 103 are in a one-to-one correspondence. Such setting can implement fast wavelength negotiation. In addition, when the pair of single-fiber bidirectional optical modules is manufactured, the plurality of groups of target wavelengths supported by the tunable filters may be uniformly configured. Costs of setting the wavelengths for the single-fiber bidirectional optical modules are reduced.

Optionally, the plurality of wavelengths supported by the tunable light sources of the first single-fiber bidirectional optical module 102 and the second single-fiber bidirectional optical module 103 are also correspondingly the same. In this way, when the pair of single-fiber bidirectional optical modules is manufactured, the plurality of groups of target wavelengths supported by the tunable filters and the plurality of wavelengths supported by the tunable light sources may be uniformly configured. Costs of setting the wavelengths for the single-fiber bidirectional optical modules are reduced.

In addition, the tunable light source of each single-fiber bidirectional optical module may support two wavelengths, and correspondingly, the tunable filter of each single-fiber bidirectional optical module supports two groups of target wavelengths. In this way, on a premise that the single-fiber bidirectional optical module can execute the wavelength adjustment procedure, a probability of successfully performing highly-efficient wavelength negotiation is effectively improved.

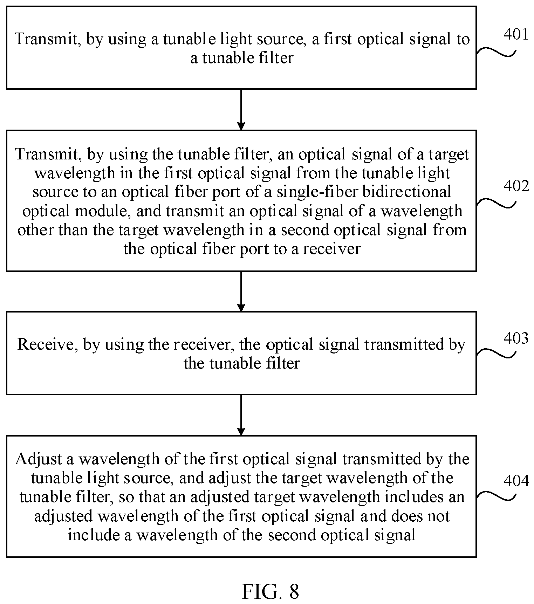

FIG. 8 is a schematic flowchart of an optical communication method according to an embodiment of this application. Any single-fiber bidirectional optical module in an optical communication system can perform the method. The method includes:
S401: Transmit, by using a tunable light source, a first optical signal to a tunable filter.

When the single-fiber bidirectional optical module needs to communicate with a peer single-fiber bidirectional optical module, the single-fiber bidirectional optical module transmits the first optical signal to the tunable filter by using the tunable light source. For example, after being powered on, the single-fiber bidirectional optical module may transmit the first optical signal to the tunable filter by using the tunable light source. For a working process of the tunable light source, refer to a corresponding working process in the foregoing embodiments of the single-fiber bidirectional optical module. Details are not described herein in this embodiment of this application.

S402: Transmit, by using the tunable filter, an optical signal of a target wavelength in the first optical signal from the tunable light source to an optical fiber port of the single-fiber bidirectional optical module, and transmit an optical signal of a wavelength other than the target wavelength in a second optical signal from the optical fiber port to a receiver.

For a working process of the tunable filter, refer to the corresponding working process in the foregoing embodiments of the single-fiber bidirectional optical module. Details are not described herein in this embodiment of this application.

S403: Receive, by using the receiver, the optical signal transmitted by the tunable filter.

For a working process of the receiver, refer to the corresponding working process in the foregoing embodiments of the single-fiber bidirectional optical module. Details are not described herein in this embodiment of this application.

S404: Adjust the wavelength of the first optical signal transmitted by the tunable light source, and adjust the target wavelength of the tunable filter, so that an adjusted target wavelength includes an adjusted wavelength of the first optical signal and does not include a wavelength of the second optical signal.

In this embodiment of this application, a wavelength adjustment procedure may have a plurality of trigger mechanisms. In this embodiment of this application, the following four trigger mechanisms are used as examples for description:

In a first trigger mechanism, a trigger condition is that a wavelength adjustment instruction is received. To be specific, after the wavelength adjustment instruction is received, the wavelength of the first optical signal transmitted by the tunable light source is adjusted, and the target wavelength of the tunable filter is adjusted.

In a second trigger mechanism, the trigger condition is that the target wavelength does not include the wavelength of the first optical signal. To be specific, after that the target wavelength does not include the wavelength of the first optical signal is determined, the wavelength of the first optical signal transmitted by the tunable light source is adjusted, and the target wavelength of the tunable filter is adjusted.

In a third trigger mechanism, the trigger condition is that the target wavelength includes the wavelength of the second optical signal. To be specific, after that the target wavelength includes the wavelength of the second optical signal is determined, the wavelength of the first optical signal transmitted by the tunable light source is adjusted, and the target wavelength of the tunable filter is adjusted.

In a fourth trigger mechanism, the trigger condition is that the optical fiber port does not input the second optical signal. To be specific, after that the optical fiber port does not input the second optical signal is determined, the wavelength of the first optical signal transmitted by the tunable light source is adjusted, and the target wavelength of the tunable filter is adjusted.

In the third trigger mechanism, the single-fiber bidirectional optical module may detect, in a plurality of manners, whether the target wavelength includes the wavelength of the second optical signal. For example, the single-fiber bidirectional optical module may determine, by detecting whether both the optical fiber port and the receiver have optical signal input, whether the target wavelength includes the wavelength of the second optical signal. Refer to FIG. 3. When the third trigger mechanism is used to trigger the wavelength adjustment procedure, before the wavelength adjustment procedure is executed, the single-fiber bidirectional optical module may further detect the second optical signal from the optical fiber port by using an optical detector. When the optical detector detects the second optical signal from the optical fiber port, and the receiver detects no optical signal, the single-fiber bidirectional optical module determines that the target wavelength includes the wavelength of the second optical signal.

Optionally, refer to FIG. 4. A process of detecting, by using the optical detector, the second optical signal from the optical fiber port includes: transmitting, by using an optical splitter, one part of the second optical signal from the optical fiber port to the tunable filter, and transmitting the other part to the optical detector; and detecting, by the optical detector, the optical signal transmitted by the optical splitter. The optical splitter is set, so that the one part of the second optical signal transmitted on a main path is output to the optical detector from a tributary path, to reduce impact on the second optical signal transmitted on the main path.

For the foregoing four trigger mechanisms, refer to corresponding implementation processes of the four trigger mechanisms in the foregoing apparatus embodiments. Details are not described in this embodiment of this application.

In this embodiment of this application, the foregoing process of adjusting the wavelength of the first optical signal transmitted by the tunable light source, and adjusting the target wavelength of the tunable filter, so that the adjusted target wavelength includes the adjusted wavelength of the first optical signal and does not include the wavelength of the second optical signal may include: performing one or more wavelength adjustment procedures until the adjusted target wavelength includes the adjusted wavelength of the first optical signal and does not include the wavelength of the second optical signal. The wavelength adjustment procedure includes: adjusting the wavelength of the first optical signal transmitted by the tunable light source, and adjusting the target wavelength of the tunable filter.

For example, at least two wavelength adjustment procedures may be performed until the adjusted target wavelength includes the adjusted wavelength of the first optical signal and does not include the wavelength of the second optical signal. When the at least two wavelength adjustment procedures are executed, every two adjacent wavelength adjustment procedures are performed at an interval of target duration. In an optional manner, the target duration is preset duration, the target duration is different from target duration of a peer single-fiber bidirectional optical module, and an interval of specified duration may be set between the two target duration. The target duration may be preset fixed duration, or may be preset variable duration. In another optional manner, the target duration is random duration. In the foregoing two optional implementations, execution moments of wavelength adjustment procedures of two single-fiber bidirectional optical modules are staggered, so that the wavelength adjustment procedures of the two single-fiber bidirectional optical modules are not executed synchronously. In this way, a quantity of times of performing the wavelength adjustment procedures of the two single-fiber bidirectional optical modules is reduced.

Optionally, in each wavelength adjustment procedure, a change amount of the adjusted target wavelength relative to the target wavelength before adjustment is less than 10 nanometers, therefore, a narrow adjustment process of the target wavelength can be implemented; and a change amount of the adjusted wavelength of the first optical signal relative to the wavelength of the first optical signal before adjustment is less than 10 nanometers, therefore, a narrow adjustment process of the wavelength of the first optical signal can be implemented. One wavelength adjustment procedure may be completed in a short time period by executing the narrow adjustment process of the first optical signal and the narrow adjustment process of the target wavelength, thereby reducing a delay in completing a wavelength negotiation process. For the corresponding adjustment process, refer to the foregoing corresponding process of the single-fiber bidirectional optical module.

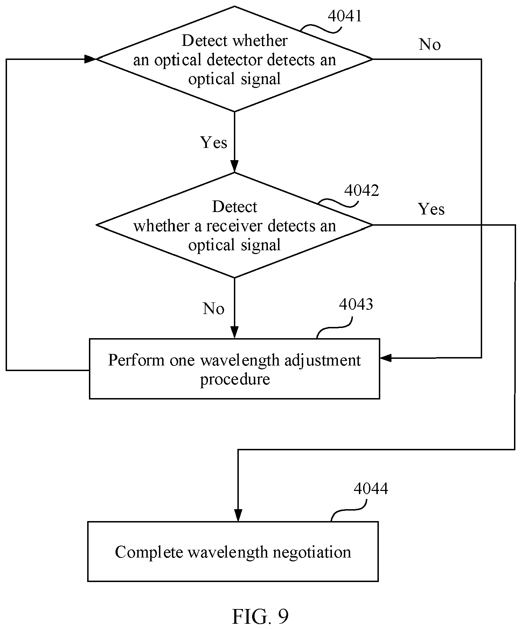

For ease understanding of a user, FIG. 9 is a schematic flowchart of a wavelength negotiation process according to an embodiment of this application. FIG. 9 schematically describes S404 in the optical communication method with reference to FIG. 4. S404 includes the following steps:
4041: Detect whether the optical detector detects the optical signal. When the optical detector detects the optical signal, perform step 4042. When the optical detector detects no optical signal, perform step 4043.
4042: Detect whether the receiver detects the optical signal. When the receiver detects the optical signal, perform step 4044. When the receiver detects no optical signal, perform step 4043.
4043: Perform one wavelength adjustment procedure, in other words, go back to perform step 4041.
4044: Complete wavelength negotiation.

In FIG. 9, an example in which one wavelength adjustment procedure can be triggered by both the third trigger mechanism and the fourth trigger mechanism is used for description, but an actual trigger mechanism of the wavelength adjustment procedure is not limited.

In this embodiment of this application, the single-fiber bidirectional optical module can adjust the wavelength of the first optical signal transmitted by the tunable light source, and adjust the target wavelength of the tunable filter, so that the adjusted target wavelength includes the adjusted wavelength of the first optical signal and does not include the wavelength of the second optical signal. In this way, the tunable filter can transmit the first optical signal from the tunable light source to the optical fiber port, and transmit the second optical signal from the optical fiber port to the receiver, thereby ensuring a transceiver function of the single-fiber bidirectional optical module. When the single-fiber bidirectional optical module is deployed and maintained in the optical communication system, because the single-fiber bidirectional optical module can ensure its transceiver function, a wavelength of an optical signal of the single-fiber bidirectional optical module does not need to be preplanned and be manually configured. This effectively simplifies deployment and maintenance of the single-fiber bidirectional optical module, and improves deployment and maintenance efficiency.

It should be noted that a sequence of the steps of the optical communication method in the embodiments of this application may be appropriately adjusted, and the steps may also be correspondingly added or deleted depending on a situation. All variant methods readily figured out by a person skilled in the art within the technical scope disclosed in this application shall fall within the protection scope of this application, and therefore are not described.

In an example embodiment, a non-transitory computer-readable storage medium including instructions is further provided, for example, a memory including instructions. The foregoing instructions may be executed by a processor of a communication apparatus to complete the optical communication method shown in the embodiments of this application. For example, the non-transitory computer-readable storage medium may be a read-only memory (Read-Only Memory, ROM), a random access memory (Random Access Memory, RAM), a compact disc read-only memory (Compact Disc Read-Only Memory, CD-ROM), a tape, a floppy disk, or an optical data storage device.

It should be noted that, when the single-fiber bidirectional optical module provided in the foregoing embodiments executes the optical communication method, division into the foregoing functional modules is merely used as an example for description. In an actual application, the foregoing functions may be allocated to different functional modules for implementation based on a requirement. In other words, an internal structure of the single-fiber bidirectional optical module is divided into different functional modules to implement all or part of functions described above. In addition, the single-fiber bidirectional optical module and the optical communication system provided in the foregoing embodiments belong to a same concept as the optical communication method embodiments. For a specific implementation process thereof, refer to the method embodiment. Details are not described herein again.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely optional embodiments of this application, but are not intended to limit this application. Any modification, equivalent replacement, or improvement made without departing from the principle of this application shall fall within the protection scope of this application.

## Claims

1. A single-fiber bidirectional optical module (20), wherein the single-fiber bidirectional optical module (20) comprises:
an optical fiber port for connecting to an optical fiber, a tunable light source (201), a tunable filter (202), a receiver (203), and a controller (204), wherein
the tunable light source (201) is configured to transmit a first optical signal to the tunable filter (202);
the tunable filter (202) is configured to: transmit an optical signal of a target wavelength in the first optical signal from the tunable light source (201) to the optical fiber port, and transmit an optical signal of a wavelength other than the target wavelength in a second optical signal from the optical fiber port to the receiver (203);
the receiver (203) is configured to receive the optical signal transmitted by the tunable filter (202); and
the controller (204) is configured to: adjust a wavelength of the first optical signal transmitted by the tunable light source (201), and adjust the target wavelength of the tunable filter (202), so that an adjusted target wavelength comprises an adjusted wavelength of the first optical signal and does not comprise a wavelength of the second optical signal.

2. The single-fiber bidirectional optical module (20) according to claim 1, wherein the controller (204) is configured to: after receiving a wavelength adjustment instruction or after determining that the target wavelength comprises the wavelength of the second optical signal, adjust the wavelength of the first optical signal transmitted by the tunable light source (201), and adjust the target wavelength of the tunable filter (202).

3. The single-fiber bidirectional optical module (20) according to claim 2, wherein the single-fiber bidirectional optical module (20) further comprises an optical detector (205); if the target wavelength comprises the wavelength of the first optical signal before the wavelength of the first optical signal transmitted by the tunable light source (201) is adjusted and the target wavelength of the tunable filter (202) is adjusted,
the optical detector (205) is configured to detect the second optical signal from the optical fiber port; and
the controller (204) is configured to: when the optical detector (205) detects the optical signal and the receiver (203) detects no optical signal, determine that the target wavelength comprises the wavelength of the second optical signal.

4. The single-fiber bidirectional optical module (20) according to claim 3, wherein the single-fiber bidirectional optical module (20) further comprises an optical splitter (206) located between the tunable filter (202) and the optical fiber port;
the optical splitter (206) is configured to: transmit one part of the second optical signal from the optical fiber port to the tunable filter (202), and transmit the other part to the optical detector (205); and
the optical detector (205) is configured to detect the optical signal transmitted by the optical splitter (206).

5. The single-fiber bidirectional optical module (20) according to claim 4, wherein the optical splitter (206) is a demultiplexer.

6. The single-fiber bidirectional optical module (20) according to any one of claims 1 to 5, wherein the controller (204) is configured to:
perform at least two wavelength adjustment procedures until the adjusted target wavelength comprises the adjusted wavelength of the first optical signal and does not comprise the wavelength of the second optical signal, wherein the wavelength adjustment procedure comprises: adjusting the wavelength of the first optical signal transmitted by the tunable light source (201), and adjusting the target wavelength of the tunable filter (202), wherein
every two adjacent wavelength adjustment procedures are performed at an interval of target duration, wherein the target duration is preset duration or random duration.

7. A communication apparatus (30), comprising the single-fiber bidirectional optical module (20) according to any one of claims 1 to 6;
an electrical signal generation module (301), wherein the electrical signal generation module (301) is connected to a tunable light source, and the electrical signal generation module (301) is configured to input an electrical signal to the tunable light source; and
an electrical signal processing module (302), wherein the electrical signal processing module (302) is connected to a receiver, the receiver is further configured to output an electrical signal to the electrical signal processing module (302) based on a received optical signal, and the electrical signal processing module (302) is configured to process the received electrical signal.

8. An optical communication system (10), wherein the optical communication system (10) comprises:
two single-fiber bidirectional optical modules (102, 103) connected through an optical fiber, wherein the two single-fiber bidirectional optical modules (102, 103) comprise the single-fiber bidirectional optical module according to any one of claims 1 to 7.

9. An optical communication method, applied to a single-fiber bidirectional optical module, wherein the method comprises:
transmitting (401), by using a tunable light source, a first optical signal to a tunable filter;
transmitting (402), by using the tunable filter, an optical signal of a target wavelength in the first optical signal from the tunable light source to an optical fiber port of the single-fiber bidirectional optical module, and transmitting an optical signal of a wavelength other than the target wavelength in a second optical signal from the optical fiber port to a receiver;
receiving (403), by using the receiver, the optical signal transmitted by the tunable filter; and
adjusting (404) a wavelength of the first optical signal transmitted by the tunable light source, and adjusting the target wavelength of the tunable filter, so that an adjusted target wavelength comprises an adjusted wavelength of the first optical signal and does not comprise a wavelength of the second optical signal.

10. The method according to claim 9, wherein the adjusting (404) a wavelength of the first optical signal transmitted by the tunable light source, and adjusting the target wavelength of the tunable filter comprises:
after receiving a wavelength adjustment instruction or after determining that the target wavelength comprises the wavelength of the second optical signal, adjusting the wavelength of the first optical signal transmitted by the tunable light source, and adjusting the target wavelength of the tunable filter.

11. The method according to claim 10, wherein if the target wavelength comprises the wavelength of the first optical signal before the wavelength of the first optical signal transmitted by the tunable light source is adjusted and the target wavelength of the tunable filter is adjusted, the method further comprises:
detecting, by using an optical detector, the second optical signal from the optical fiber port; and
when the optical detector detects the second optical signal from the optical fiber port and the receiver detects no optical signal, determining that the target wavelength comprises the wavelength of the second optical signal.

12. The method according to claim 11, wherein the detecting, by using an optical detector, the second optical signal from the optical fiber port comprises:
transmitting, by using an optical splitter, one part of the second optical signal from the optical fiber port to the tunable filter, and transmitting the other part to the optical detector; and
detecting, by the optical detector, the optical signal transmitted by the optical splitter.

13. The method according to any one of claims of 9 to 12, the adjusting (404) a wavelength of the first optical signal transmitted by the tunable light source, and adjusting the target wavelength of the tunable filter, so that an adjusted target wavelength comprises an adjusted wavelength of the first optical signal and does not comprise a wavelength of the second optical signal comprises:
performing at least two wavelength adjustment procedures until the adjusted target wavelength comprises the adjusted wavelength of the first optical signal and does not comprise the wavelength of the second optical signal, wherein the wavelength adjustment procedure comprises: adjusting the wavelength of the first optical signal transmitted by the tunable light source, and adjusting the target wavelength of the tunable filter, wherein
every two adjacent wavelength adjustment procedures are performed at an interval of target duration, wherein the target duration is preset duration or random duration.

14. The method according to claim 13, wherein in each wavelength adjustment procedure, a change amount of the adjusted target wavelength relative to the target wavelength before adjustment is less than 10 nanometers; and a change amount of the adjusted wavelength of the first optical signal relative to the wavelength of the first optical signal before adjustment is less than 10 nanometers.

15. A computer-readable storage medium, wherein the computer-readable storage medium stores at least one piece of program code, and the program code is loaded and executed by a processor to implement the optical communication method according to any one of claims 9 to 14.
